# EUROPEAN PATENT SPECIFICATION

(11) **EP 4 371 905 B1**
(45) Date of publication and mention of the grant of the patent: **19.08.2026**
(21) Application number: 22207790.1
(22) Date of filing: 16.11.2022
(51) Int. Cl.: B65G 1/04

(54) **A STORAGE AND ORDER COLLECTION APPARATUS**
VORRICHTUNG ZUM LAGERN UND SAMMELN VON BESTELLUNGEN
APPAREIL DE STOCKAGE ET DE COLLECTE DE COMMANDES

(43) Date of publication of application: 22.05.2024
(73) Proprietor: i-Collector Holding B.V., 7031 JB Wehl (NL)
(72) Inventor: Willemse, Theodorus Robertus Maria, 3906 EV Veenendaal (NL)
(74) Representative: De Vries & Metman

(56) References cited:
- WO-A1-2020/236926
- US-A1- 2018 029 796

## Description

The present invention relates to a storage and order collection apparatus, comprising a plurality of storage levels, wherein each storage level is provided with a plurality of elongate storage sections which extend parallel to each other, wherein each of the storage sections has a first end and an opposite second end and comprises a support on which a row of carriers is supported adjacent to each other in longitudinal direction of the storage section, which row of carriers is movable with respect to the support in longitudinal direction of the storage section, wherein the distance between the first and second ends substantially equals the sum of the lengths of a whole number of carriers in longitudinal direction of the storage section, wherein the first ends of the storage sections lie in a front plane and the rear ends of the storage sections lie in a rear plane.

Such a storage and order collection apparatus is known from EP 2 601 117. The known apparatus has a plurality of storage levels and carriers for storing articles. Each of the storage sections is occupied with the row of carriers over the full length thereof and allows a movement of the row of carriers with respect to the support. The apparatus is provided with a first and a second platform which can be moved simultaneously to a first end and a second end, respectively, of a selected first storage section such that they are aligned with the selected first storage section. A carrier on the first platform, which may contain a product to be stored, can be displaced to the first storage section and push the row of carriers in the direction of the second platform such that a carrier adjacent to the second platform is displaced to the second platform. Subsequently, the first and second platforms can be moved to a selected second storage section, where the carrier on the second platform can be displaced to the second storage section and push the row of carriers in the direction of the first platform. Then, the first and second platforms can be returned to the first storage section and the process can be repeated until a target carrier in the row of carriers at the first storage section is received by the second platform. The target carrier, for example containing an ordered product, can be discharged from the apparatus, whereas the carrier that was initially on the first platform is stored such that the number of carriers circulating within the apparatus is maintained.

WO 2020/236926 discloses the preamble of claim 1 and is related to a high-density storage system for goods in which totes carrying the goods are storage in a storage structure and stored and retrieved by robotic carriers. The carriers move laterally and/or longitudinally along the exterior of the support structure and retrieve totes from the interior of the structure by manipulating rows of coupled totes. Totes at the ends of rows are quickly removed and stored in another row until the desired tote appears at the end of the row, at which point the carrier proceeds with the tote to the exit point of the storage system. Storing totes is also a quick action by pushing them into any row. As a tote is pushed into the row, it will automatically couple with a tote inside the row that it comes into contact with.

The present invention aims to provide a storage and order collection apparatus which can operate efficiently.

For this purpose the storage and order collection apparatus according to the invention as defined in claim 1 is provided.

An advantage of the apparatus according to the invention is that the process of storing and collecting carriers can be performed efficiently, since the process at each storage level can be continued by the first and second shuttles while transporting carriers to be stored and/or collected vertically by the input and output elevators. The input-output conveyor for transporting carriers from the elevator output to the elevator input creates a closed loop system in which collected carriers from the output elevator can be emptied along the input-output conveyor after which the emptied carriers can be loaded along the input-output conveyor with products to be stored.

The first displacement system may comprise conveyors at the first and second shuttles, respectively, for example drivable endless conveyor belts. The conveyors can be controlled such that when the first and second shuttles are aligned with one of the storage sections a carrier on the conveyor of the first shuttle can be moved towards the storage section and push the row of carriers at the storage section towards the second shuttle such that a carrier adjacent to the second end of the storage section is moved to the second shuttle, whereas the conveyor of the second shuttle simultaneously draws that carrier to itself. Numerous alternatives of the first displacement system are conceivable.

The second displacement system may comprise a conveyor at the first shuttle, for example the same one as described hereinbefore, and at the input elevator. The conveyor at the input elevator may move a carrier towards the first shuttle and the conveyor at the first shuttle may draw the carrier to itself. Numerous alternatives of the second displacement system are conceivable.

The third displacement system may comprise a conveyor at the second shuttle, for example the same one as described hereinbefore, and at the output elevator. The conveyor at the second shuttle may move a carrier towards the output elevator and the conveyor at the output elevator may draw the carrier to itself. Alternatively, the third displacement system may comprise a conveyor at the first shuttle, for example the same one as described hereinbefore, and at the output elevator. The conveyor at the first shuttle may move a carrier towards the output elevator and the conveyor at the output elevator may draw the carrier to itself. Numerous alternatives of the third displacement system are conceivable.

The second displacement system comprises an input buffer device between the first shuttle path and the input elevator at each storage level for temporarily storing a carrier between the first shuttle path and the input elevator, wherein the third displacement system comprises an output buffer device between the output elevator and one of the first and second shuttle paths along which said one of the first and second shuttles travels under operating conditions, respectively, at each storage level for temporarily storing a carrier between the output elevator and said one of the first and second shuttle paths. In this case the input elevator and the first shuttle do not need to wait for each other if a carrier should be transferred between the first shuttle and the input elevator at a certain storage level, whereas the input elevator has not arrived at that storage level yet. Similarly, the output elevator and the at least one of the first and second shuttle do not need to wait for each other if a carrier should be transferred between the at least one of the first and second shuttle and the output elevator at a certain storage level, whereas the output elevator has not arrived at that storage level yet.

The input buffer device and the output buffer device may comprise an input buffer conveyor for transporting a carrier between the first shuttle path and the input elevator, for example a drivable endless belt, and an output buffer conveyor for transporting a carrier between the output elevator and said one of the first and second shuttle paths, for example a drivable endless belt, respectively. This facilitates transferring the carriers between the input and output elevators and the first and second shuttles.

In a preferred embodiment the input elevator is located at a lateral side of the first shuttle path and the output elevator is located at a lateral side of one of the first and second shuttle paths along which said one of the first and second shuttles travels, respectively, under operating conditions, since this provides the opportunity to transfer carriers between the input and output elevators and the first and second shuttles in the same direction as between the first and second shuttles and each of the storage sections, such that in case of conveyors at the respective first and shuttles it can be used for transferring a carrier in both situations.

The input elevator and the output elevator may be located between the front plane and the rear plane next to the storage sections as seen from above. This provides a compact apparatus.

In an embodiment the output elevator cooperates with the second shuttles at each storage level and the third displacement system is suitable for transferring carriers between the output elevator and the second shuttles at the respective storage levels.

In an embodiment the output elevator cooperates with the first shuttles at each storage level and the third displacement system is suitable for transferring carriers between the output elevator and the first shuttles at the respective storage levels. In this case, the first shuttle at each storage level cooperates with both the input and output elevator.

The input elevator and the output elevator may be located behind each other in a direction along the first shuttle path.

The input elevator and the output elevator may have respective platforms which are movable in vertical direction along a common column, for example at opposite sides of the common column.

In a particular embodiment the input conveyor is a first input conveyor and the output conveyor is a first output conveyor, wherein the apparatus is provided with a second input conveyor which cooperates with the second shuttles at each storage level and the second displacement system is suitable for transferring carriers between the second input elevator and the second shuttles at the respective storage levels, wherein the apparatus is provided with a second output elevator which cooperates with the second shuttles at each storage level and the third displacement system is suitable for transferring carriers between the second output elevator and the second shuttles at the respective storage levels.

The second input elevator and the second output elevator may be located behind each other in a direction along the second shuttle path.

The second input elevator and the second output elevator may have respective platforms which are movable in vertical direction along a common column, for example at opposite sides of the common column.

At least two storage levels may have different height levels. This provides the opportunity to store products of different heights.

In an embodiment electrical conductor rails are provided along the first and second shuttle paths for providing electric traction power to the respective first and second shuttles. This is advantageous in terms of weight of the first and second shuttles, since they do not need batteries for driving the shuttles.

The invention will hereafter be elucidated with reference to the schematic drawings showing an embodiment of the invention by way of example.
Fig. 1 is a perspective view of an embodiment of a storage and order collection apparatus according to the invention.
Fig. 2 is a similar view as Fig. 1, but showing the apparatus in a different operation mode.
Fig. 3 is a top view of the apparatus as shown in Fig. 1.
Fig. 4 is a top view of the apparatus as shown in Fig. 2.
Fig. 5 is a front view of the apparatus as shown in Fig. 1.
Fig. 6 is a side view of the apparatus as shown in Fig. 1.

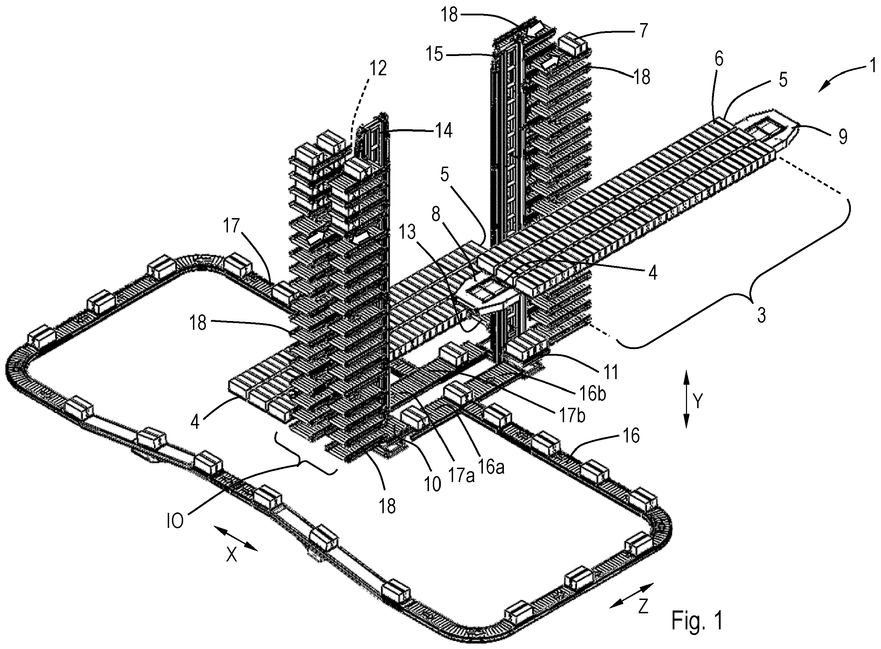

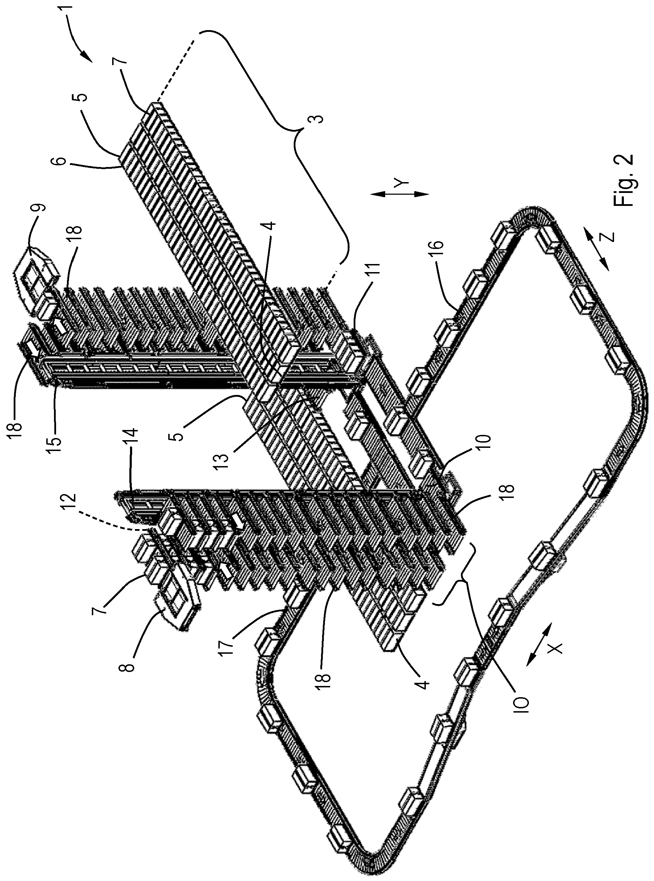

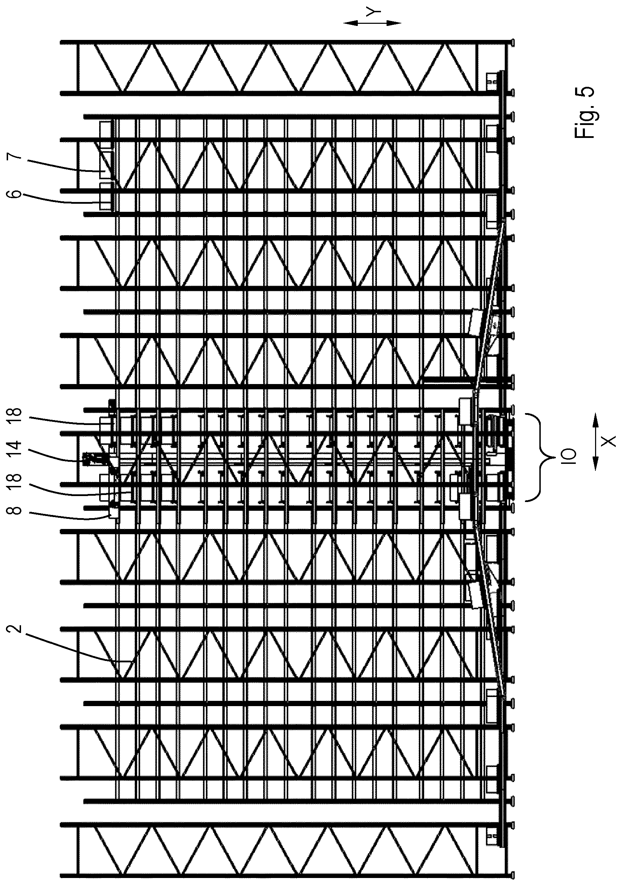

Figs. 1-6 show an embodiment of a storage and order collection apparatus 1 according to the invention. The apparatus 1 comprises a frame 2 which is provided with a plurality of storage levels in direction Y, for example 20 storage levels. Each storage level is provided with a plurality of parallel elongate storage sections 3 adjacent to each other in direction X, for example 40 storage sections 3. In Figs. 1 and 2 the frame 2 is not shown for clarity reasons. Each of the storage sections 3 extends in direction Z between a first end 4 and a second end 5 and comprises a support on which a row of carriers 6 are supported adjacent to each other, in this case 20 carriers 6. The support is not shown for clarity reasons, but it is part of the frame 2; it may comprise two parallel rails on which the carriers 6 rest and on which the carriers 6 may slide in longitudinal thereof. The first ends 4 of the storage sections 3 lie in a vertical front plane and the rear ends 5 of the storage sections 3 lie in a vertical rear plane.

In the embodiment as shown the length of each storage section 3 is approximately 20 times the length of one carrier 6 in the direction Z. In other words, the distance between the first and second ends 4, 5 substantially equals the sum of the lengths of a whole number of carriers 6 in longitudinal direction of the storage section 3. For clarity reasons Figs. 1 and 2 show only three neighbouring storage sections 3 at the uppermost storage level and three neighbouring storage sections 3 at the lowermost storage level. In reality the whole frame 2 may be filled with carriers 6 such that in case of 20 storage levels, 40 storage sections 3 per storage level and 20 carriers 6 per storage section a total number of 16,000 carriers 6, i.e. storage locations, are present in the apparatus 1.

At each storage section 3 the carriers 6 are slidable on the support in longitudinal direction of the storage section 3. Each of the carriers 6 as shown in the figures bear a box-shaped container 7. In this case, the carriers 6 are in the form of trays, but alternative shapes are conceivable, for example containers, boxes, or the like.

The carriers 6 are provided with unique identification marks, such as a barcode or RFID. For reading the barcodes or RFIDs sensors are present, that are functionally connected to a control unit (not shown). In the control unit a relationship can be made between a carrier 6 and a product that it supports, so that the location of each carrier 6 including the product in the apparatus 1 is exactly known.

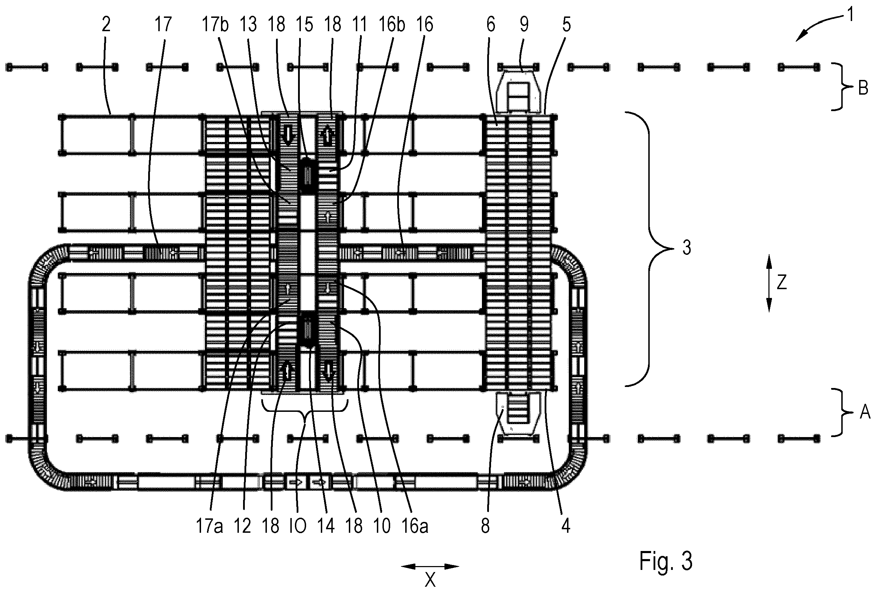

Each storage level has a first shuttle 8 and a second shuttle 9, although for clarity reasons in Figs. 1-6 the first and second shuttles 8, 9 are only shown at the uppermost storage level. The first and second shuttles 8, 9 are supported by the frame 2 and moveable with respect to the frame 2 along a first shuttle path A extending along the first ends 4 of the storage sections 3 and a second shuttle path B extending along the second ends 5 of the storage sections 3, respectively, see Figs. 3, 4 and 6. The first and second shuttle paths A, B extend in direction X along the front plane and the rear plan, respectively, i.e. perpendicular to the longitudinal directions of the storage sections 3.

Each of the first and second shuttles 8, 9 is provided with wheels in order to travel fast on the frame 2 at low resistance. The first and second shuttles 8, 9 are drivable independently from each other, but cooperate under operating conditions. They are provided with respective electrical motors for driving them along the respective first and second shuttle paths A, B. At each storage level the frame 2 is provided with electrical conductor rails (not shown) along the respective first and second shuttle paths A, B for providing electric traction power to the respective first and second shuttles 8, 9. Due to the absence of batteries the first and second shuttles 8, 9 have relatively small weights. Besides, electrical charging devices are omitted.

Each of the first and second shuttles 8, 9 is suitable to support two carriers 6 behind each other in Z-direction, i.e. perpendicularly to the first and second shuttle paths A, B. Each of the first and second shuttles 8, 9 is provided with a drivable conveyor belt for supporting one or two carriers 6 and transporting them in opposite directions in longitudinal direction of the storage sections 3.

Fig. 3 illustrates a situation in which the first and second shuttles 8, 9 cooperate. The first and second shuttles 8, 9 are located opposite to each other at a selected storage section 3 between two neighbouring storage sections 3 such that they are aligned with the selected storage section 3. The first shuttle 8 supports two carriers 6 whereas the second shuttle 9 is empty. If, for example, two target carriers 6 adjacent to the second end 5 of the selected storage section 3 should be collected for order picking, the conveyor belt of the first shuttle 8 can be operated such that the carriers 6 from the first shuttle 8 are moved to the support of the selected storage section 3 thereby pushing against the row of carriers 6 at the storage section 3. Consequently, the row of carriers 6 at the storage section 3 slides on the support towards the second shuttle 9 and the two target carriers 6 adjacent to the second end 5 are received by the second shuttle 9. During this process the conveyor belt of the second shuttle 9 may be operated, as well, such that the carriers 6 are drawn onto the second shuttle 9. This facilitates displacement of the target carriers 6.

If, for example, one target carrier 6 within the row of the selected storage section 3 at a distance from the first and second ends 4, 5 should be collected, the same operation may be performed, but after receiving the two carriers 6 by the second shuttle 9, the loaded second shuttle 9 and the empty first shuttle 8 are moved simultaneously to another storage section 3 where the carriers 6 being present on the second shuttle 9 are moved to the corresponding row of carriers 6 such that two carriers 6 adjacent to the first end 4 of that storage section 3 are received by the first shuttle 8. Subsequently, the loaded first shuttle 8 and the empty second shuttle 9 are moved simultaneously back to the former storage section 3 in which the target carrier 3 is located. Then, one carrier 6 or both carriers 6 being present on the first shuttle 8 are moved to the storage section 3 such that one carrier 6 or two carriers 6 adjacent to the second end 5 of the latter storage section 3 are received by the second shuttle 9, and so on. This order picking process can be repeated until the target carrier 6 is received by the second shuttle 9.

Of course, the process can also be performed in opposite direction such that the first shuttle 8 receives the target carrier 6. This may depend on the location of the target carrier 6; if, for example the target carrier 6 is located closer to the second end 5 than the first end 4 of the storage section 3 the target carrier 6 can be collected faster by repeatedly shifting the row of carriers 6 in a direction from the first shuttle 8 to the second shuttle 9.

The conveyors at the first and second shuttles 8, 9 are part of a first displacement system of the apparatus 1.

The apparatus 1 comprises a first input elevator 10 and a second input elevator 11, a first output elevator 12 and a second output elevator 13. The first and second input elevators 10, 11 are configured to transport a carrier 6 including a product to be stored in upward direction from respective elevator inputs selectively to one of the storage levels, whereas the first and second output elevators 12, 13 are configured to transport a collected carrier 6 including a product selectively from one of the storage levels in downward direction to respective elevator outputs. The first input elevator 10 and the first output elevator 12 are provided with respective platforms that are movable independently from each other in vertical direction along a first pillar 14. The second input elevator 11 and the second output elevator 13 are also provided with respective platforms that are movable independently from each other in vertical direction along a second pillar 15. Each of the platforms of the elevators 10-13 is provided with a drivable conveyor belt for supporting and transporting two carriers 6 parallel to the storage sections 3, i.e. in the direction Z.

The first and second input elevators 10, 11 are part of a second displacement system of the apparatus 1 and the first and second output elevators 12, 13 are part of a third displacement system of the apparatus 1.

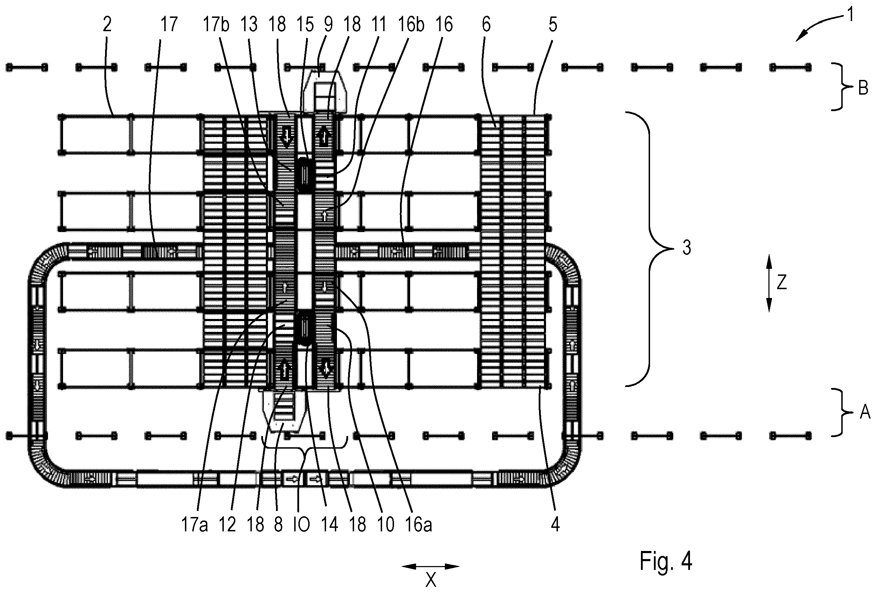

It can be seen in Figs. 3 and 4 that no storage sections 3 are available at the location of the elevators 10-13. In other words, the elevators 10-13 are part of an input-output section IO of the apparatus 1, whereas the storage sections 3 extend at opposite sides of the input-output section IO. In the embodiment as shown in Figs. 1-6 the input-output section IO is located halfway the first and second shuttle paths A, B between two columns of neighbouring storage sections 3 but in an alternative embodiment the input-output section IO may be arranged differently, for example at one of the opposite ends of the first and second shuttle paths A, B.

Below the lowermost storage level of the apparatus 1 is a carrier input conveyor 16 which transports the carriers 6 to a T-junction of the input-output section IO from where the carriers 6 are selectively transportable to the platforms of the first and second input elevators 10, 11 via input conveyor branches 16a, 16b. The input conveyor branches 16a, 16b may be considered as being elevator inputs of the first and second input elevators 10, 11. Similarly, there is also a carrier output conveyor 17 which transports the carriers 6 from a T-junction of the input-output section IO where the carriers 6 from the first and second output elevators 12, 13 arrive via output conveyor branches 17a, 17b. The output conveyor branches 17a, 17b may be considered as being elevator outputs of the first and second output elevators 12, 13. The input conveyor 16 and the output conveyor 17 together form an input-output conveyor and are part of a loop which partly extends outside the frame 2 as seen from above, see Figs. 3 and 4. Operators may be present along the loop in order to take products from the collected carriers 6 arriving on the output conveyor 17 and/or put products to the empty carriers 6 which are intended to be transported via the input conveyor 16 towards the first and second input elevators 10, 11.

At each storage level the input-output section IO comprises buffer conveyors 18, which extend between the first input and output elevators 10, 12 and the first shuttle path A, on the one hand, and between the second input and output elevators 11, 13 and the second shuttle path B, on the other hand, see Figs. 3 and 4. The buffer conveyors 18 at each storage level extend parallel to the storage sections 3. The buffer conveyors 18 at the respective storage levels as well as the input and output elevators 10, 12 are located between the front plane and the rear plane of the apparatus 1. Figs. 1 and 2 show four columns of the buffer conveyors 18, two pairs thereof adjacent to the first shuttle paths A at the respective storage levels and two pairs thereof adjacent to the second shuttle paths B at the respective storage levels. The buffer conveyors 18 allow carriers 6 to be stored temporarily, for example in case of waiting for arrival of the cooperating elevators 10-13, whereas the first and second shuttles 8, 9 can still travel along the storage sections 3, independent from the carrier handling process at the input-output section IO, for example for order picking in the meantime.

The locations along the first and second shuttle paths A, B at the input-output section IO where the first and second shuttles 8, 9 can be aligned with the respective buffer conveyors 18 are transfer locations where carriers 6 can be transferred between the first and second shuttles 8, 9 and the cooperating elevators 10-13. Since the locations of the buffer conveyors 18 are next to the first and second shuttle paths A, B between the front plane and the rear plane the first and second shuttles 8, 9 are allowed to travel along the entire first and second shuttle paths A, B without being obstructed by carriers 6 on the buffer conveyors 18.

Fig. 4 illustrates a situation in which one collected carrier 6 can be moved from the first shuttle 8 at the first shuttle path A to the buffer conveyor 18 that cooperates with the first output elevator 12, whereas another carrier 6 can be moved from the buffer conveyor 18 that cooperates with the second input elevator 11 to the second shuttle 9 at the second shuttle path B. Due to the arrangement of the first output elevator 12 and the second input elevator 11 the first and second shuttles 8, 9 are not aligned in this case. Therefore, the first and second shuttles 8, 9 are drivable independently from each other.

After loading the second shuttle 9 with a carrier 6 and emptying the first shuttle 8, both the first and second shuttles 9 can be moved to a selected storage section 3 where the carrier 6 on the second shuttle 9 may be supplied to the storage section 3 whereas the first shuttle 8 receives a carrier 6 from the selected storage section 3, for example for picking an order in a manner as described hereinbefore. The process of collecting a target carrier 3 for picking an order can be continued whereas the mentioned buffer conveyors 18, the first output elevator 12 and the second input elevator 11 can manage the input and the output of the carriers 6 to and from the same storage level. It is noted, that the number of carriers 6 that are moved from the first shuttle 8 to the corresponding buffer conveyor 18 must be equal to the number of carriers 6 that are moved to the second shuttle 9 from the corresponding buffer conveyor 18 before the first and second shuttles 8, 9 travel to a selected storage section 3 for introducing the carriers 6 from the second shuttle 9.

In another situation (not shown) the first shuttle 8 is located at the buffer conveyor 18 that cooperates with the first input elevator 10 for receiving at least one carrier 6, whereas the second shuttle 9 is located at the buffer conveyor 18 that cooperates with the second output elevator 13 for moving at least one carrier 6 from the second shuttle 9 to the buffer conveyor 18.

Each of the buffer conveyors 18 which cooperate with the first and second input elevators 10, 11 are provided with a conveyor belt for moving one or two carriers 6 to the respective platforms of the first and second input elevators 10, 11. When moving one or two carriers 6 to one of the first and second shuttles 8, 9 the conveyor belts of the corresponding buffer conveyor 18 and the one of the first and second shuttles 8, 9 may be operated. When moving one or two carriers 6 from one of the first and second input elevators 10, 11 to the cooperating buffer conveyor 18 the conveyor belts of both the platforms of the one of the first and second input elevators 10, 11 and of the corresponding buffer conveyor 18 may be operated. Similarly, each of the buffer conveyors 18 which cooperate with the first and second output elevators 12, 13 are provided with a conveyor belt for moving one or two carriers 6 to the platforms of the first and second output elevators 12, 13. When moving one or two carriers 6 from one of the first and second shuttles 8, 9 both the conveyor belts of the corresponding buffer conveyor 18 and the one of the first and second shuttles 8, 9 may be operated. When moving one or two carriers 6 to one of the first and second output elevators 10, 11 the conveyor belts of both the platforms of the one of the first and second output elevators 10, 11 and of the corresponding buffer conveyor 18 may be operated.

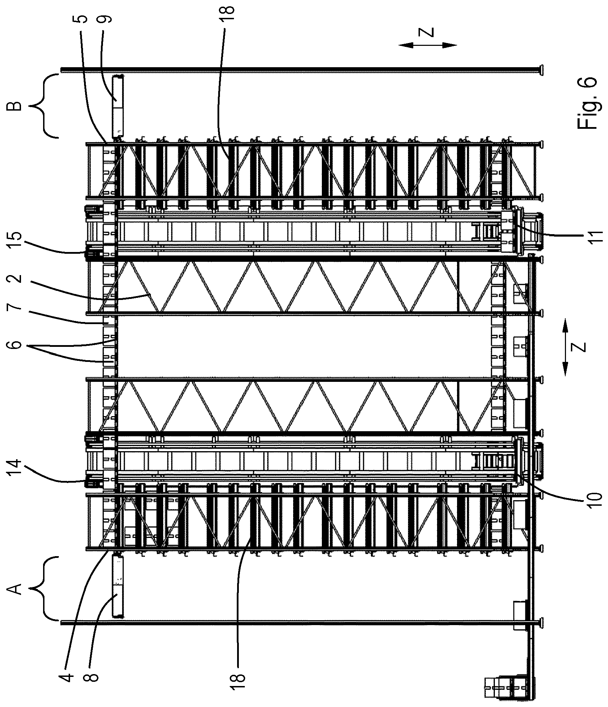

Fig. 6 illustrates a situation in which the first input conveyor 10 is moving downwardly to receive a carrier 6 from the input conveyor branch 16a, whereas the second input conveyor 11 has received two carriers 6 from the input conveyor branch 16b and is moving upwardly. Fig. 6 also shows that three of the storage levels have a larger height then the other storage levels, allowing storage of trays including relatively high products.

The first and second shuttles 8, 9, the elevators 10-13 and the buffer conveyors 18 can be operated by a controller and controlled such that an optimized storage and order collection process is performed.

The invention is not limited to the embodiments shown in the drawings and described hereinbefore, which may be varied in different manners within the scope of the claims.

## Claims

1. A storage and order collection apparatus (1), comprising a plurality of storage levels, wherein each storage level is provided with a plurality of elongate storage sections (3) which extend parallel to each other, wherein each of the storage sections (3) has a first end (4) and an opposite second end (5) and comprises a support (2) on which a row of carriers (6) is supported adjacent to each other in longitudinal direction of the storage section (3), which row of carriers (6) is movable with respect to the support (2) in longitudinal direction of the storage section (3), wherein the distance between the first and second ends (4, 5) substantially equals the sum of the lengths of a whole number of carriers (6) in longitudinal direction of the storage section (3), wherein the first ends (4) of the storage sections (3) lie in a front plane and the rear ends (5) of the storage sections lie in a rear plane, wherein at each storage level a first shuttle (8) for supporting at least one carrier (6) and a second shuttle (9) for supporting at least one carrier (6) are moveable along a first shuttle path (A) extending along the first ends (4) of the storage sections (3) and a second shuttle path (B) extending along the second ends (5) of the storage sections (3), respectively, wherein the apparatus (1) is provided with a first displacement system for moving a carrier (6) from the first shuttle (8) to the first end (4) of a selected storage section (3) and simultaneously shifting the row of carriers (6) at the selected storage section (3) such that a carrier (6) adjacent to the second end (5) of the selected storage section (3) is received by the second shuttle (9) or from the second shuttle (9) to the second end (5) of a selected storage section (3) and simultaneously shifting the row of carriers (6) at the selected storage section (3) such that a carrier (6) adjacent to the first end (4) of the selected storage section (3) is received by the first shuttle (8) when the first and second shuttles (8, 9) are located at the first and second ends (4, 5) of the selected storage section (3), respectively, wherein the apparatus (1) is provided with an input elevator (10, 11) for transporting carriers (6) from an elevator input in upward direction along the storage levels towards the first shuttles (8) at the respective storage levels and a second displacement system for transferring carriers (6) between the input elevator (10, 11) and the first shuttles (8) at the respective storage levels, an output elevator (12, 13) for receiving carriers (6) from one of the first and second shuttles (8, 9) at each storage level and transporting carriers (6) in downward direction along the storage levels to an elevator output, a third displacement system for transferring carriers (6) between the output elevator (12, 13) and said one of the first and second shuttles (8, 9) at the respective storage levels, and an input-output conveyor (16, 17) for transporting carriers (6) from the elevator output to the elevator input, **characterized in that** the second displacement system comprises an input buffer device (18) between the first shuttle path (A) and the input elevator (10, 11) at each storage level for temporarily storing a carrier (6) between the first shuttle path (A) and the input elevator (10, 11), wherein the third displacement system comprises an output buffer device (18) between the output elevator (12, 13) and one of the first and second shuttle paths (A, B) along which said one of the first and second shuttles (8, 9) travels under operating conditions, respectively, at each storage level for temporarily storing a carrier (6) between the output elevator (12, 13) and said one of the first and second shuttle paths (A, B).

2. A storage and order collection apparatus (1) according to claim 1, wherein the input buffer device and the output buffer device comprise an input buffer conveyor (18) for transporting a carrier (6) between the first shuttle path (A) and the input elevator (10, 11) and an output buffer conveyor (18) for transporting a carrier (6) between the output elevator (12, 13) and said one of the first and second shuttle paths (A, B), respectively.

3. A storage and order collection apparatus (1) according to any one of the preceding claims, wherein the input elevator (10, 11) is located at a lateral side of the first shuttle path (A) and the output elevator (12, 13) is located at a lateral side of one of the first and second shuttle paths (A, B) along which said one of the first and second shuttles (8, 9) travels, respectively, under operating conditions.

4. A storage and order collection apparatus (1) according to claim 3, wherein the input elevator (10, 11) and the output elevator (12, 13) are located between the front plane and the rear plane next to the storage sections (3) as seen from above.

5. A storage and order collection apparatus (1) according to any one of the preceding claims, wherein the output elevator (13) cooperates with the second shuttles (9) at each storage level and the third displacement system is suitable for transferring carriers between the output elevator (13) and the second shuttles (9) at the respective storage levels.

6. A storage and order collection apparatus (1) according to any one of the claims 1-4, wherein the output elevator (12) cooperates with the first shuttles (8) at each storage level and the third displacement system is suitable for transferring carriers between the output elevator (12) and the first shuttles (8) at the respective storage levels.

7. A storage and order collection apparatus (1) according to claim 6 and to claim 3 or 4, wherein the input elevator (10) and the output elevator (12) are located behind each other in a direction along the first shuttle path (A).

8. A storage and order collection apparatus (1) according to claim 7, wherein the input elevator (10) and the output elevator (12) have respective platforms which are movable in vertical direction along a common column (14).

9. A storage and order collection apparatus (1) according to any one of the claims 6-8, wherein the input conveyor is a first input conveyor (10) and the output conveyor is a first output conveyor (12), wherein the apparatus is provided with a second input conveyor (11) which cooperates with the second shuttles (9) at each storage level and the second displacement system is suitable for transferring carriers (6) between the second input elevator (11) and the second shuttles (9) at the respective storage levels, wherein the apparatus is provided with a second output elevator (13) which cooperates with the second shuttles (9) at each storage level and the third displacement system is suitable for transferring carriers (6) between the second output elevator (13) and the second shuttles (9) at the respective storage levels.

10. A storage and order collection apparatus (1) according to claim 9, wherein the second input elevator (11) and the second output elevator (13) are located behind each other in a direction along the second shuttle path (B).

11. A storage and order collection apparatus (1) according to claim 10, wherein the second input elevator (10) and the second output elevator (12) have respective platforms which are movable in vertical direction along a common column (15).

12. A storage and order collection apparatus (1) according to any one of the preceding claims, wherein at least two storage levels have different height levels.

13. A storage and order collection apparatus (1) according to any one of the preceding claims, wherein electrical conductor rails are provided along the first and second shuttle paths (A, B) for providing electric traction power to the respective first and second shuttles (8, 9).

## Patentansprüche

1. Lager- und Kommissioniervorrichtung (1) mit einer Mehrzahl von Lagerebenen, wobei jede Lagerebene mit einer Mehrzahl von länglichen Lagerabschnitten (3) versehen ist, die sich parallel zueinander erstrecken, wobei jeder der Lagerabschnitte (3) ein erstes Ende (4) und ein entgegengesetztes zweites Ende (5) hat und einen Halter (2) aufweist, auf dem eine Reihe von Trägern (6) in Längsrichtung des Lagerabschnitts (3) benachbart zueinander gehalten ist, wobei diese Reihe von Trägern (6) bezüglich des Halters (2) in Längsrichtung des Lagerabschnitts (3) bewegbar ist, wobei der Abstand zwischen dem ersten und dem zweiten Ende (4, 5) im Wesentlichen gleich der Summe der Längen einer Gesamtanzahl von Trägern (6) in Längsrichtung des Lagerabschnitts (3) ist, wobei die ersten Enden (4) der Lagerabschnitte (3) in einer vorderen Ebene liegen und die hinteren Enden (5) der Lagerabschnitte in einer hinteren Ebene liegen, wobei in jeder Lagerebene ein erstes Shuttle (8) zum Tragen mindestens eines Trägers (6) und ein zweites Shuttle (9) zum Tragen mindestens eines Trägers (6) zugeordnet entlang einer ersten Shuttle-Bahn (A), die sich entlang der ersten Enden (4) der Lagerabschnitte (3) erstreckt, und einer zweiten Shuttle-Bahn (B) bewegbar sind, die sich entlang der zweiten Enden (5) der Lagerabschnitte (3) erstreckt, wobei die Vorrichtung (1) versehen ist mit einem ersten Verlagerungssystem zum Bewegen eines Träger (6) vom ersten Shuttle (8) zum ersten Ende (4) eines ausgewählten Lagerabschnitts Abschnitt (3) und zugleich Verschieben der Reihe von Trägern (6) im ausgewählten Lagerabschnitt (3), sodass ein Träger (6) benachbart zu dem zweiten Ende (5) des ausgewählten Lagerabschnitts (3) vom zweiten Shuttle (9) aufgenommen wird, oder vom zweiten Shuttle (9) zum zweiten Ende (5) eines ausgewählten Lagerabschnitts (3) und zugleich Verschieben der Reihe von Trägern (6) im ausgewählten Lagerabschnitts (3), sodass ein Träger (6) benachbart zu dem ersten Ende (4) des ausgewählten Lagerabschnitts (3) vom ersten Shuttle (8) aufgenommen wird, wenn sich das erste und das zweite Shuttle (8, 9) zugeordnet am ersten und am zweiten Ende (4, 5) des ausgewählten Lagerabschnitts (3) befinden, wobei die Vorrichtung (1) bereitgestellt ist mit einem Eingangsaufzug (10, 11) zum Transportieren von Trägern (6) von einem Aufzugseingang aus in Aufwärtsrichtung entlang der Lagerebenen in Richtung zu den ersten Shuttles (8) in den jeweiligen Lagerebenen und einem zweiten Verlagerungssystem zum Transferieren von Trägern (6) zwischen dem Eingangsaufzug (10, 11) und den ersten Shuttles (8) in den jeweiligen Lagerebenen, einem Ausgangsaufzug (12, 13) zum Aufnehmen von Trägern (6) von einem von dem ersten und dem zweiten Shuttle (8, 9) in jeder Lagerebene und zum Transportieren von Trägern (6) in Abwärtsrichtung entlang der Lagerebenen zu einem Aufzugsausgang, einem dritten Verlagerungssystem zum Transferieren von Trägern (6) zwischen dem Ausgangsaufzug (12, 13) und dem einen von dem ersten und dem zweiten Shuttle (8, 9) in den jeweiligen Lagerebenen, und einem Eingangs-Ausgangs-Förderer (16, 17) zum Transportieren von Trägern (6) vom Aufzugausgang zum Aufzugseingang, **dadurch gekennzeichnet, dass** das zweite Verlagerungssystem eine Eingangspuffervorrichtung (18) zwischen der ersten Shuttle-Bahn (A) und dem EingangsAufzug (10, 11) in jeder Lagerebene zum temporären Lagern eines Trägers (6) zwischen der ersten Shuttle-Bahn (A) und dem Eingangsaufzug (10, 11) aufweist, wobei das dritte Verlagerungssystem eine Ausgangspuffervorrichtung (18) zwischen dem Ausgangsaufzug (12, 13) und einer von der ersten und der zweiten Shuttle-Bahn (A, B), entlang derer sich zugeordnet das eine von dem ersten und dem zweiten Shuttle (8, 9) unter Betriebsbedingungen bewegt, in jeder Lagerebene zum temporären Lagern eines Trägers (6) zwischen dem Ausgangsaufzug (12, 13) und der einen von der ersten und der zweiten Shuttle-Bahn (A, B) aufweist.

2. Lager- und Kommissioniervorrichtung (1) gemäß Anspruch 1, wobei die Eingangspuffervorrichtung und die Ausgangspuffervorrichtung zugeordnet einen Eingangspufferförderer (18) zum Transportieren eines Trägers (6) zwischen dem ersten Shuttle-Pfad (A) und dem Eingangsaufzug (10, 11) sowie einen Ausgangspufferförderer (18) zum Transportieren eines Trägers (6) zwischen dem Ausgangsaufzug (12, 13) und der einen von der ersten und der zweiten Shuttle-Bahn (A, B) aufweisen.

3. Lager- und Kommissioniervorrichtung (1) gemäß irgendeinem der vorstehenden Ansprüche, wobei der Eingangsaufzug (10, 11) an einer seitlichen Seite der ersten Shuttle-Bahn (A) angeordnet ist und der Ausgangsaufzug (12, 13) an einer seitlichen Seite einer von der ersten und der zweiten Shuttle-Bahn (A, B) angeordnet ist, entlang derer zugeordnet sich das eine von dem ersten und dem zweiten Shuttle (8, 9) unter Betriebsbedingungen bewegt.

4. Lager- und Kommissioniervorrichtung (1) gemäß Anspruch 3, wobei der Eingangsaufzug (10, 11) und der Ausgangsaufzug (12, 13) von oben gesehen zwischen der vorderen Ebene und der hinteren Ebene nächst zu den Lagerabschnitten (3) angeordnet sind.

5. Lager- und Kommissioniervorrichtung (1) gemäß irgendeinem der vorstehenden Ansprüche, wobei der Ausgangsaufzug (13) in jeder Lagerebene mit den zweiten Shuttles (9) zusammenwirkt und das dritte Verlagerungssystem dazu geeignet ist, Träger zwischen dem Ausgangsaufzug (13) und den zweiten Shuttles (9) in den jeweiligen Lagerebenen zu transferieren.

6. Lager- und Kommissioniervorrichtung (1) gemäß irgendeinem der Ansprüche 1-4, wobei der Ausgangsaufzug (12) mit den ersten Shuttles (8) in jeder Lagerebene zusammenwirkt und das dritte Verlagerungssystem dazu geeignet ist, Träger zwischen dem Ausgangsaufzug (12) und den ersten Shuttles (8) in den jeweiligen Lagerebenen zu transferieren.

7. Lager- und Kommissioniervorrichtung (1) gemäß Anspruch 6 und gemäß Anspruch 3 oder 4, wobei der Eingangsaufzug (10) und der Ausgangsaufzug (12) in einer Richtung entlang der ersten Shuttle-Bahn (A) hintereinander angeordnet sind.

8. Lager- und Kommissioniervorrichtung (1) gemäß Anspruch 7, wobei der Eingangsaufzug (10) und der Ausgangsaufzug (12) jeweilige Plattformen aufweisen, die in vertikaler Richtung entlang einer gemeinsamen Säule (14) bewegbar sind.

9. Lager- und Kommissioniervorrichtung (1) gemäß irgendeinem der Ansprüche 6-8, wobei der Eingangsförderer ein erster Eingangsförderer (10) und der Ausgangsförderer ein erster Ausgangsförderer (12) ist, wobei die Vorrichtung mit einem zweiten Eingangsförderer (11) versehen ist, der mit den zweiten Shuttles (9) in jeder Lagerebene zusammenwirkt und das zweite Verlagerungssystem dazu geeignet ist, Träger (6) zwischen dem zweiten Eingangsaufzug (11) und den zweiten Shuttles (9) in den jeweiligen Lagerebenen zu transferieren, wobei die Vorrichtung mit einem zweiten Ausgangsaufzug (13) versehen ist, der mit den zweiten Shuttles (9) in jeder Lagerebene zusammenwirkt, und das dritte Verlagerungssystem dazu geeignet ist, Träger (6) zwischen dem zweiten Ausgangsaufzug (13) und den zweiten Shuttles (9) in den jeweiligen Lagerebenen zu transferieren.

10. Lager- und Kommissioniervorrichtung (1) gemäß Anspruch 9, wobei der zweite Eingangsaufzug (11) und der zweite Ausgangsaufzug (13) in einer Richtung entlang der zweiten Shuttle-Bahn (B) hintereinander angeordnet sind.

11. Lager- und Kommissioniervorrichtung (1) gemäß Anspruch 10, wobei der zweite Eingangsaufzug (10) und der zweite Ausgangsaufzug (12) jeweilige Plattformen aufweisen, die in vertikaler Richtung entlang einer gemeinsamen Säule (15) bewegbar sind.

12. Lager- und Kommissioniervorrichtung (1) gemäß irgendeinem der vorstehenden Ansprüche, wobei mindestens zwei Lagerebenen unterschiedliche Höhenlevels haben.

13. Lager- und Kommissioniervorrichtung (1) gemäß irgendeinem der vorstehenden Ansprüche, wobei entlang der ersten und der zweiten Shuttle-Bahn (A, B) elektrische Stromschienen bereitgestellt sind, um das jeweilige erste und zweite Shuttle (8, 9) mit elektrischer Antriebsleistung zu versorgen.

## Revendications

1. Appareil de stockage et de collecte de commandes (1), comprenant une pluralité de niveaux de stockage, dans lequel chaque niveau de stockage est pourvu d'une pluralité de sections de stockage allongées (3) qui s'étendent parallèlement les unes aux autres, dans lequel chacune des sections de stockage (3) a une première extrémité (4) et une seconde extrémité opposée (5) et comprend un support (2) sur lequel une rangée de porteurs (6) est supportée de manière adjacente aux autres dans la direction longitudinale de la section de stockage (3), laquelle rangée de porteurs (6) est mobile par rapport au support (2) dans la direction longitudinale de la section de stockage (3), dans lequel la distance entre les première et seconde extrémités (4, 5) est sensiblement égale à la somme des longueurs d'un nombre entier de porteurs (6) dans la direction longitudinale de la section de stockage (3), dans lequel les premières extrémités (4) des sections de stockage (3) se trouvent dans un plan avant et les extrémités arrière (5) des sections de stockage se trouvent dans un plan arrière, dans lequel, à chaque niveau de stockage, une première navette (8) pour supporter au moins un porteur (6) et une seconde navette (9) pour supporter au moins un porteur (6) sont mobiles le long d'un premier trajet de navette (A) s'étendant le long des premières extrémités (4) des sections de stockage (3) et d'un second trajet de navette (B) s'étendant le long des secondes extrémités (5) des sections de stockage (3), respectivement, dans lequel l'appareil (1) est pourvu d'un premier système de déplacement pour déplacer un porteur (6) de la première navette (8) à la première extrémité (4) d'une section de stockage sélectionnée (3) et pour décaler simultanément la rangée de porteurs (6) au niveau de la section de stockage sélectionnée (3) de sorte qu'un porteur (6) adjacent à la seconde extrémité (5) de la section de stockage sélectionnée (3) est reçu par la seconde navette (9) ou de la seconde navette (9) à la seconde extrémité (5) d'une section de stockage sélectionnée (3) et pour décaler simultanément la rangée de porteurs (6) au niveau de la section de stockage sélectionnée (3) de sorte qu'un porteur (6) adjacent à la première extrémité (4) de la section de stockage sélectionnée (3) est reçu par la première navette (8) lorsque les première et seconde navettes (8, 9) sont situées respectivement au niveau des première et seconde extrémités (4, 5) de la section de stockage sélectionnée (3), dans lequel l'appareil (1) est pourvu d'un élévateur d'entrée (10, 11) pour transporter des porteurs (6) d'un élévateur d'entrée dans une direction vers le haut le long des niveaux de stockage vers les premières navettes (8) aux niveaux de stockage respectifs et d'un deuxième système de déplacement pour transférer des porteurs (6) entre l'élévateur d'entrée (10, 11) et les premières navettes (8) aux niveaux de stockage respectifs, d'un élévateur de sortie (12, 13) pour recevoir des porteurs (6) depuis l'une des première et seconde navettes (8, 9) à chaque niveau de stockage et transporter des porteurs (6) dans une direction vers le bas le long des niveaux de stockage vers une sortie d'élévateur, d'un troisième système de déplacement pour transférer des porteurs (6) entre l'élévateur de sortie (12, 13) et ladite une des première et seconde navettes (8, 9) aux niveaux de stockage respectifs, et d'un convoyeur d'entrée-sortie (16, 17) pour transporter des porteurs (6) de la sortie d'élévateur à l'entrée d'élévateur, **caractérisé en ce que** le deuxième système de déplacement comprend un dispositif tampon d'entrée (18) entre le premier trajet de navette (A) et l'élévateur d'entrée (10, 11) à chaque niveau de stockage pour stocker temporairement un porteur (6) entre le premier trajet de navette (A) et l'élévateur d'entrée (10, 11), dans lequel le troisième système de déplacement comprend un dispositif tampon de sortie (18) entre l'élévateur de sortie (12, 13) et l'un des premier et second trajets de navette (A, B), le long duquel circule ladite une des première et seconde navettes (8, 9) respectivement dans des conditions de fonctionnement à chaque niveau de stockage pour stocker temporairement un porteur (6) entre l'élévateur de sortie (12, 13) et ledit un des premier et second trajets de navette (A, B).

2. Appareil de stockage et de collecte de commandes (1) selon la revendication 1, dans lequel le dispositif tampon d'entrée et le dispositif tampon de sortie comprennent un convoyeur tampon d'entrée (18) pour transporter un porteur (6) entre le premier trajet de navette (A) et l'élévateur d'entrée (10, 11) et un convoyeur tampon de sortie (18) pour transporter un porteur (6) entre l'élévateur de sortie (12, 13) et ledit un des premier et second trajets de navette (A, B), respectivement.

3. Appareil de stockage et de collecte de commandes (1) selon l'une quelconque des revendications précédentes, dans lequel l'élévateur d'entrée (10, 11) est situé sur un côté latéral du premier trajet de navette (A) et l'élévateur de sortie (12, 13) est situé sur un côté latéral de l'un des premier et second trajets de navette (A, B) le long duquel circule ladite une des première et seconde navettes (8, 9), respectivement, dans des conditions de fonctionnement.

4. Appareil de stockage et de collecte de commandes (1) selon la revendication 3, dans lequel l'élévateur d'entrée (10, 11) et l'élévateur de sortie (12, 13) sont situés entre le plan avant et le plan arrière à côté des sections de stockage (3) comme observé de dessus.

5. Appareil de stockage et de collecte de commandes (1) selon l'une quelconque des revendications précédentes, dans lequel l'élévateur de sortie (13) coopère avec les secondes navettes (9) à chaque niveau de stockage et le troisième système de déplacement est adapté pour transférer des porteurs entre l'élévateur de sortie (13) et les secondes navettes (9) aux niveaux de stockage respectifs.

6. Appareil de stockage et de collecte de commandes (1) selon l'une quelconque des revendications 1 à 4, dans lequel l'élévateur de sortie (12) coopère avec les premières navettes (8) à chaque niveau de stockage et le troisième système de déplacement est adapté pour transférer des porteurs entre l'élévateur de sortie (12) et les premières navettes (8) aux niveaux de stockage respectifs.

7. Appareil de stockage et de collecte de commandes (1) selon la revendication 6 et selon la revendication 3 ou 4, dans lequel l'élévateur d'entrée (10) et l'élévateur de sortie (12) sont situés l'un derrière l'autre dans une direction le long du premier trajet de navette (A).

8. Appareil de stockage et de collecte de commandes (1) selon la revendication 7, dans lequel l'élévateur d'entrée (10) et l'élévateur de sortie (12) ont des plateformes respectives qui sont mobiles dans la direction verticale le long d'une colonne commune (14).

9. Appareil de stockage et de collecte de commandes (1) selon l'une quelconque des revendications 6 à 8, dans lequel le convoyeur d'entrée est un premier convoyeur d'entrée (10) et le convoyeur de sortie est un premier convoyeur de sortie (12), dans lequel l'appareil est pourvu d'un second convoyeur d'entrée (11) qui coopère avec les secondes navettes (9) à chaque niveau de stockage et le deuxième système de déplacement est adapté pour transférer des porteurs (6) entre le second élévateur d'entrée (11) et les secondes navettes (9) aux niveaux de stockage respectifs, dans lequel l'appareil est pourvu d'un second élévateur de sortie (13) qui coopère avec les secondes navettes (9) à chaque niveau de stockage et le troisième système de déplacement est adapté pour transférer des porteurs (6) entre le second élévateur de sortie (13) et les secondes navettes (9) aux niveaux de stockage respectifs.

10. Appareil de stockage et de collecte de commandes (1) selon la revendication 9, dans lequel le second élévateur d'entrée (11) et le second élévateur de sortie (13) sont situés l'un derrière l'autre dans une direction le long du second trajet de navette (B).

11. Appareil de stockage et de collecte de commandes (1) selon la revendication 10, dans lequel le second élévateur d'entrée (10) et le second élévateur de sortie (12) ont des plateformes respectives qui sont mobiles dans la direction verticale le long d'une colonne commune (15).

12. Appareil de stockage et de collecte de commandes (1) selon l'une quelconque des revendications précédentes, dans lequel au moins deux niveaux de stockage ont des niveaux en hauteur différents.

13. Appareil de stockage et de collecte de commandes (1) selon l'une quelconque des revendications précédentes, dans lequel des rails conducteurs électriques sont agencés le long des premier et second trajets de navette (A, B) pour fournir une puissance de traction électrique aux première et seconde navettes (8, 9) respectives.
